(19) Europäisches Patentamt
European Patent Office
Office européen des brevets

(11) **EP 4 184 439 A1**

(12) **DEMANDE DE BREVET EUROPEEN**

(43) Date de publication:
**24.05.2023 Bulletin 2023/21**

(51) Classification Internationale des Brevets (IPC):
***G06T 7/50*** *(2017.01)*      ***G06T 7/70*** *(2017.01)*

(21) Numéro de dépôt: **22204743.3**

(52) Classification Coopérative des Brevets (CPC):
**G06T 7/50; G06T 7/70;** G06T 2207/10004;
G06T 2207/30232

(22) Date de dépôt: **31.10.2022**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **18.11.2021 FR 2112190**

(71) Demandeur: **Idemia Identity & Security France
92400 Courbevoie (FR)**

(72) Inventeur: **PERRAULT, Pierre
92400 Courbevoie (FR)**

(74) Mandataire: **Idemia
2, place Samuel de Champlain
92400 Courbevoie (FR)**

(54) **PROCÉDÉ DE DÉTERMINATION DE COORDONNÉES D'UN POINT D'UN ÉLÉMENT D'INTÉRÊT DANS LE MONDE RÉEL EN FONCTION DE COORDONNÉES DUDIT POINT DANS UNE IMAGE**

(57) L'invention porte sur un procédé de détermination par un calculateur, à partir d'une image (i) prise par un dispositif de prise de vue (10) comprenant un élément d'intérêt (E) repéré par une pluralité de points image (p), des coordonnées réelles (X, Y, Z) d'un point d'intérêt (P) dans l'environnement du dispositif de prise de vue (10) correspondant à un point image (p) de la pluralité de points image (p), le procédé comprenant les étapes suivantes :
- une étape de sélection dans l'image (i) par le calculateur d'un point image remarquable (pr) parmi la pluralité de points image (p), le point image remarquable (pr) correspondant dans l'environnement réel à un point remarquable (Pr) dont l'ordre de grandeur de la hauteur est connu, une hauteur prédéfinie étant attribuée à la hauteur,
- une étape de calcul par le calculateur (20) d'une profondeur absolue du point image remarquable (pr) à partir d'un triplet de composantes $(x_r, y_r, w_r)$ du point image remarquable (pr) et de la hauteur prédéfinie,
- une étape de détermination par le calculateur des coordonnées réelles (X, Y, Z) du point d'intérêt (P) dans l'environnement réel du dispositif de prise de vue, à partir d'un triplet de composantes $(x, y, w)$ du point image (p) correspondant au point d'intérêt (P) et de la profondeur absolue.

EP 4 184 439 A1

**Description**

L'invention concerne le domaine de l'imagerie par dispositif de prise de vue, et concerne plus précisément un procédé de détermination de coordonnées d'un point d'un élément d'intérêt dans le monde réel en fonction de coordonnées dudit point dans une image.

Il est connu de l'état de la technique d'utiliser des réseaux de neurones pour générer des cartes de disparités pour estimer la profondeur d'un point dans une image, et permettre de déterminer les coordonnées de ce point dans le monde réel.

Ces réseaux de neurones ne donnent pas des résultats satisfaisants sur des images de large plan issues d'une vidéo de surveillance d'un lieu car le dispositif de prise de vue est à une distance bien supérieure aux distances réelles entre les éléments d'intérêt d'une image.

En outre, les cartes de disparités ne permettent pas de déterminer la profondeur absolue d'un point d'une image mais uniquement la profondeur relative.

Sont également connus certains réseaux qui estiment la distance d'un élément d'intérêt sur la base de la taille de sa boîte englobante. Ce principe est bien adapté aux dispositifs de prise de vue qui se trouvent au niveau du sol, mais ne s'applique pas bien aux situations d'images provenant d'une vidéo de surveillance où la taille apparente d'un élément d'intérêt est également affectée par la position du dispositif de prise de vue.

L'invention vise à résoudre les problèmes susmentionnés de l'état de la technique en proposant un procédé de détermination des coordonnées d'un point d'un élément d'intérêt dans le monde réel en utilisant des coordonnées pixeliques dudit point dans l'image et sa profondeur relative par rapport à un point de référence par l'intermédiaire du calcul d'une profondeur absolue dudit point de référence.

L'invention porte sur un procédé de détermination par un calculateur, à partir d'une image prise par un dispositif de prise de vue comprenant un élément d'intérêt repéré par une pluralité de points image, des coordonnées réelles d'un point d'intérêt dans l'environnement du dispositif de prise de vue correspondant à un point image de la pluralité de points image, chaque point image étant caractérisé par un triplet de composantes comprenant des coordonnées bidimensionnelles pixeliques et une profondeur relative par rapport à un point image de référence appartenant à la pluralité de points image, chaque point image correspondant dans l'environnement réel à un point de coordonnées réelles comprenant une hauteur, le procédé comprenant les étapes suivantes :

- une étape de sélection dans l'image par le calculateur d'un point image remarquable parmi la pluralité de points image, le point image remarquable correspondant dans l'environnement réel à un point remarquable dont l'ordre de grandeur de la hauteur est connu, une hauteur prédéfinie étant attribuée à la hauteur du point image remarquable,
- une étape de calcul par le calculateur d'une profondeur absolue du point image remarquable à partir du triplet de composantes du point image remarquable et de la hauteur prédéfinie,
- une étape de détermination par le calculateur des coordonnées réelles du point d'intérêt dans l'environnement réel du dispositif de prise de vue, à partir du triplet de composantes du point image correspondant au point d'intérêt et de la profondeur absolue.

Selon un aspect de l'invention, le point image remarquable sélectionné est localisé au niveau du sol de sorte que la hauteur prédéfinie est nulle.

Selon un aspect de l'invention, l'élément d'intérêt est une personne se tenant debout sur le sol.

Selon un aspect de l'invention, l'élément d'intérêt est une personne, la pluralité de points image ne comporte aucun point image localisé au niveau du sol, le point image remarquable sélectionné est localisé au niveau d'un bassin de ladite personne et la hauteur prédéfinie est une valeur comprise entre 65 cm et 85 cm.

Selon un aspect de l'invention, l'élément d'intérêt est une personne, la pluralité de points image ne comporte aucun point image localisé au niveau du sol, le point image remarquable sélectionné est localisé au niveau de la tête de ladite personne et la hauteur prédéfinie est une valeur comprise entre 155 cm et 180 cm.

Selon un aspect de l'invention, le dispositif de prise de vue est caractérisé par des paramètres de calibration prédéterminés comprenant :

- un angle d'inclinaison transverse du dispositif de prise de vue,
- une distance focale du dispositif de prise de vue,
- une hauteur à laquelle est disposé le dispositif de prise de vue.

Selon un aspect de l'invention, la profondeur absolue est calculée par la formule suivante : $wa = -\cos(\theta) \cdot Zr + (c - Hr) \cdot \sin(\theta)$, avec

- wa : la profondeur absolue,

- θ : l'angle d'inclinaison transverse du dispositif de prise de vue,
- c : la hauteur à laquelle est disposé le dispositif de prise de vue,
- Hr : la hauteur prédéfinie du point remarquable,
- Zr : une composante des coordonnées réelles (Xr, Yr, Zr) du point remarquable dans un repère terrestre tel que représenté sur la figure 1.

Selon un aspect de l'invention, l'étape de calcul comprend :

- une sous étape d'estimation par le calculateur des coordonnées réelles du point remarquable dans l'environnement réel du dispositif de prise de vue en fonction des paramètres de calibration, du triplet de composantes du point image remarquable et de la hauteur prédéfinie,
- une sous étape de calcul par le calculateur de la profondeur absolue du point image remarquable à partir des coordonnées réelles estimées du point remarquable et des paramètres de calibration.

Selon un aspect de l'invention, l'étape de détermination comprend :

- une sous étape de transformation par le calculateur du triplet de composantes du point image correspondant au point d'intérêt, en un triplet de composantes absolues à partir de la profondeur absolue,
- une sous étape de détermination par le calculateur des coordonnées réelles du point d'intérêt dans l'environnement réel du dispositif de prise de vue, à partir du triplet de composantes absolues et des paramètres de calibration.

Selon un aspect de l'invention, le triplet de composantes absolues est déterminé par les formules suivantes :

$$x' = x,$$

$$y' = y,$$

$$w' = w + wa - wr,$$

avec :

- (x', y', w') : le triplet de composantes absolues,
- (x, y, w) : le triplet de composantes du point image correspondant au point d'intérêt,
- wa : la profondeur absolue,
- wr : la profondeur relative du point image remarquable.

Selon un aspect de l'invention, les coordonnées bidimensionnelles pixeliques d'un point image sont définies dans un repère image dont l'origine est situé dans un centre de l'image et les coordonnées réelles du point d'intérêt sont déterminées comme suit :

$$X = \frac{x'}{f} \cdot w'$$

$$Y = c - \frac{y' \cdot w' \cdot \cos(\theta)}{f} - w' \cdot \sin(\theta)$$

$$Z = \frac{y' \cdot w' \cdot \sin(\theta)}{f} - w' \cdot \cos(\theta)$$

avec :

- (X, Y, Z) : les coordonnées réelles du point d'intérêt,

- (x', y', w') : le triplet de composantes absolues,
- θ : l'angle d'inclinaison transverse du dispositif de prise de vue,
- c : la hauteur à laquelle est disposé le dispositif de prise de vue,
- f : la distance focale du dispositif de prise de vue.

L'invention porte également sur un programme d'ordinateur comprenant les instructions de programme mettant en oeuvre les étapes du procédé de détermination, lorsque les instructions de programme sont exécutées par un ordinateur.

D'autres avantages et caractéristiques de l'invention apparaîtront à la lecture de la description et des dessins.

La figure 1 représente un modèle géométrique de référentiel image et d'environnement réel.

La figure 2a représente une image comprenant un élément d'intérêt correspondant à une personne et repéré par une pluralité de points image ainsi que l'élément d'intérêt dans le monde réel, selon un premier exemple de réalisation.

La figure 2b représente la même image qu'en figure 2a et le même élément d'intérêt dans le monde réel, selon un deuxième exemple de réalisation.

La figure 2c représente la même image qu'en figure 2a et le même élément d'intérêt dans le monde réel, selon un troisième exemple de réalisation.

La figure 3a représente une image comprenant un élément d'intérêt correspondant à un véhicule et repéré par une pluralité de points image ainsi que l'élément d'intérêt dans le monde réel, selon un quatrième exemple de réalisation.

La figure 3b représente la même image qu'en figure 3a et le même élément d'intérêt dans le monde réel, selon un cinquième exemple de réalisation.

La figure 4 illustre un exemple de système pour la mise en oeuvre du procédé selon l'invention.

La figure 5 illustre les étapes du procédé selon l'invention.

La figure 1 représente un dispositif de prise de vue 10 disposé en hauteur par rapport au sol. L'environnement du dispositif de prise de vue est repéré dans le monde réel tridimensionnel par un référentiel terrestre dont l'origine est un point au sol à la verticale du dispositif de prise de vue 10. Les axes du référentiel terrestre comprennent un axe AY orienté vers le haut et passant par le dispositif de prise de vue 10, et deux axes AX, AZ localisés dans le plan du sol au-dessus duquel est disposé le dispositif de prise de vue 10. Le dispositif de prise de vue a pour coordonnées $(X, Y, Z) = (0, c, 0)$ dans le repère terrestre.

Le dispositif de prise de vue 10 est caractérisé par des paramètres de calibration prédéterminés comprenant :

- un angle θ d'inclinaison transverse, c'est à dire l'angle de tangage défini par l'angle entre l'axe principal A du dispositif de prise de vue 10 et une direction horizontale,
- une distance focale f,
- une hauteur c à laquelle est disposée le dispositif de prise de vue 10.

Un ou plusieurs paramètres de calibration f, θ, c sont par exemple déterminés à partir d'images du dispositif de prise de vue 10.

Un ou plusieurs paramètres de calibration f, θ, c sont par exemple mesurés dans l'environnement réel du dispositif de prise de vue 10.

Les paramètres de calibration f, θ, c du dispositif de prise de vue 10 permettant de mettre en correspondance les cordonnées spatiales d'un point dans le champ du dispositif de prise de vue, dites coordonnées « réelles » car exprimées dans un référentiel terrestre, avec les coordonnées planes de la représentation de ce point dans l'image acquise par le dispositif de prise de vue, dites coordonnées « image », c'est à dire sa projection.

Dans le champ de vision du dispositif de prise de vue 10 se trouve un élément d'intérêt E, comme par exemple sur la figure 1 une personne se tenant debout. Ainsi, une image i prise par le dispositif de prise de vue 10 comprend l'élément d'intérêt E, c'est à dire de manière plus exacte son image.

L'élément d'intérêt E est repéré dans l'image i par une pluralité de points image p.

Un élément d'intérêt est un objet ou une personne auquel on s'intéresse vis-à-vis d'un application cible. Par exemple dans le cadre d'une application cible de distanciation sociale, un élément d'intérêt est une personne. Dans le cadre d'une application cible de vérification des distances dans un environnement routier, un élément d'intérêt est un véhicule, un piéton, un cycliste. Dans le cadre d'une application cible d'évitement ou d'analyse de collision, un élément d'intérêt peut être en outre un objet tel qu'un arbre, une borne.

Par exemple l'élément d'intérêt est une personne qui est modélisée par quinze points de squelette, chaque point de squelette dans l'image correspondant à un point image p.

La pluralité de points image p comprend un point image de référence pref. Sur la figure 1, le point image de référence pref se situe au niveau du bassin de la personne.

Dans une image i acquise par le dispositif de prise de vue 10, il est défini un repère image bidimensionnel. Le repère image a pour origine le centre de l'image i et comprend deux axes d'abscisse Ax horizontal et d'ordonnée Ay vertical.

Dans le repère image, chaque point image p est caractérisé par un triplet de composantes (x, y, w) comprenant des coordonnées bidimensionnelles pixeliques (x, y) et une profondeur relative w par rapport au point image de référence pref.

Chaque point image p correspond dans l'environnement réel à un point P de coordonnées réelles (X, Y, Z) comprenant une hauteur Y associée à l'axe AY du référentiel terrestre orienté vers le haut.

La pluralité de points image p comprend en outre un point image remarquable pr. Sur la figure 1, le point image remarquable se situe au niveau d'un pied de la personne.

Dans l'image, le point image remarquable pr est caractérisé par le triplet de composantes (xr, yr, wr).

Dans le monde réel, le point remarquable Pr correspondant au point image remarquable pr a pour coordonnées réelles (Xr, Yr, Zh).

Le point remarquable Pr est remarquable en ce que l'ordre de grandeur de la hauteur Yr est connu. Dans les étapes du procédé de l'invention, une hauteur prédéfinie Hr est attribuée à la hauteur Yr du point image remarquable. Par exemple, la hauteur prédéfinie est une moyenne des hauteurs connues du point remarquable Pr associé à l'élément d'intérêt.

Par exemple, dans le cas d'un élément d'intérêt correspondant à une personne et d'un point remarquable localisé au niveau du bassin, la hauteur Yr est de l'ordre de grandeur de 70cm, ce qui correspond à l'ordre de grandeur de la hauteur moyenne du bassin d'une personne.

Par exemple, dans le cas d'un élément d'intérêt correspondant à une personne et d'un point remarquable localisé au niveau de la tête, la hauteur Yr est de l'ordre de grandeur de 160cm, ce qui correspond à l'ordre de grandeur de la taille moyenne d'une personne.

Certaines hypothèses sont en outre avantageusement faites sur le contexte :

- l'angle de roulis du dispositif de prise de vue 10 est supposé négligeable,
- l'angle de lacet du dispositif de prise de vue 10 est supposé négligeable,
- la distorsion dans une image i acquise par le dispositif de prise de vue 10 est supposée négligeable,
- le centre optique du dispositif de prise de vie 10 correspond au centre de l'image i,
- le sol de l'environnement du dispositif de prise de vue 10, dans le champ de vision du dispositif de prise de vue 10, est plat.

La figure 2a, la figure 2b et la figure 2c illustrent sur la partie gauche une image i comprenant un élément d'intérêt E correspondant à une personne, repéré par 15 points image issus d'une modélisation en points de squelettes. L'élément d'intérêt E dans le monde réel est représenté la partie de droite de chaque figure.

Selon un premier exemple de réalisation représenté en figure 2a, chaque point image p est caractérisé par un triplet de composantes (x, y, w) comprenant des coordonnées bidimensionnelles pixeliques (x, y) et une profondeur relative w par rapport à un point image de référence pref localisé au niveau du bassin. Le point image remarquable pr sélectionné est le même que le point image de référence, c'est-à-dire localisé au niveau du bassin. Dans le monde réel, la hauteur prédéfinie Hr du point remarquable Pr est par exemple égale à 70 cm.

Selon un deuxième exemple de réalisation représenté en figure 2b, chaque point image p est caractérisé par un triplet de composantes (x, y, w) comprenant des coordonnées bidimensionnelles pixeliques (x, y) et une profondeur relative w par rapport à un point image de référence pref localisé au niveau du bassin. Le point image remarquable pr sélectionné est localisé au niveau d'un des pieds de la personne, c'est-à-dire au niveau du sol. Dans le monde réel, la hauteur prédéfinie Hr du point remarquable Pr est égale à zéro.

Selon un troisième exemple de réalisation représenté en figure 2c, chaque point image p est caractérisé par un triplet de composantes (x, y, w) comprenant des coordonnées bidimensionnelles pixeliques (x, y) et une profondeur relative w par rapport à un point image de référence pref localisé au niveau du sol. Le point image remarquable pr sélectionné est localisé au niveau de la tête de la personne. Dans le monde réel, la hauteur prédéfinie Hr du point remarquable Pr est par exemple égale à 160 cm.

La figure 3a et la figure 3b illustrent sur la partie gauche une image i comprenant un élément d'intérêt E correspondant à un véhicule automobile, repéré par 8 points image issus d'une modélisation de type enveloppe de délimitation parallélépipédique. L'élément d'intérêt E dans le monde réel est représenté la partie de droite de chaque figure.

Selon un quatrième exemple de réalisation représenté en figure 3a, chaque point image p est caractérisé par un triplet de composantes (x, y, w) comprenant des coordonnées bidimensionnelles pixeliques (x, y) et une profondeur relative w par rapport à un point image de référence pref localisé au niveau du sol. Le point image remarquable pr sélectionné est localisé dans un coin supérieur de l'enveloppe de délimitation BB du véhicule, c'est-à-dire à la même hauteur que le toit du véhicule. Dans le monde réel, la hauteur prédéfinie Hr du point remarquable Pr est par exemple égale à 170 cm.

Selon un cinquième exemple de réalisation représenté en figure 3a, chaque point image p est caractérisé par un triplet de composantes (x, y, w) comprenant des coordonnées bidimensionnelles pixeliques (x, y) et une profondeur relative w par rapport à un point image de référence pref localisé au niveau du sol. Le point image remarquable pr sélectionné est identique au point de rérérence pref, c'est-à-dire au niveau du sol. Dans le monde réel, la hauteur prédéfinie Hr du point remarquable Pr est égale à zéro.

La figure 4 illustre un système comprenant un dispositif de prise de vue 10, un détecteur d'éléments d'intérêt 11 et un calculateur 20.

Le dispositif de prise de vue 10 est apte à acquérir une images i d'une scène de son environnement. Le dispositif de prise de vue 10 est de manière préférentielle une caméra vidéo, mais peut être un appareil photo.

Le détecteur d'éléments d'intérêt 11 est configuré pour détecter des éléments d'intérêt E dans une image i prise par le dispositif de prise de vue 10, et à déterminer des points clés d'un élément d'intérêt par exemple pour générer un modèle simplifié tel qu'un squelette de quinze points pour une personne ou une enveloppe de délimitation BB pour un véhicule automobile. Ces points clés sont des points image p dans l'image i.

Le détecteur d'éléments d'intérêt 11 peut être scindé en deux sous dispositifs distincts apte à communiquer entre eux, un premier dispositif étant apte à détecter des éléments d'intérêt E dans l'image i et un deuxième dispositif étant apte à déterminer des points clés d'un élément d'intérêt détecté par le premier dispositif, par exemple par régression.

Le détecteur d'éléments d'intérêt 11 génère pour chaque élément d'intérêt E détecté dans une image i, une pluralité de points image p, chaque point image étant associé à un triplet de composantes (x, y, w).

Le calculateur 20 récupère pour un élément d'intérêt E détecté sur une image i le triplet de composantes (x, y, w) associé. Les coordonnées bidimensionnelles (x, y) d'un triplet de composantes (x, y, w) sont utilisables par le calculateur 20 pour exécuter le procédé de l'invention, directement ou après un éventuel changement de repère si les coordonnées bidimensionnelles (x, y) ne sont pas référencées dans le repère image tel que décrit et illustré sur la figure 1.

Le calculateur 20 comprend un sélecteur 21 apte à sélectionner un point image remarquable pr parmi une pluralité de points image p associée à un élément d'intérêt E et à y associer une hauteur prédéfinie Hr dans le monde réel.

Le calculateur 20 comprend un opérateur 22 apte :

- à calculer une profondeur absolue wa du point image remarquable pr à partir du triplet de composantes (xr, yr, wr) du point image remarquable pr et de la hauteur prédéfinie Hr,
- et à déterminer pour un point image p, les coordonnées réelles (X, Y, Z) du point correspondant dans l'environnement réel du dispositif de prise de vue et appelé point d'intérêt P, à partir du triplet de composantes (x, y, w) du point image (p) et de la profondeur absolue wa.

La figure 5 illustre les étapes du procédé selon l'invention.

Le procédé de l'invention vise à déterminer, à partir d'une image i prise par un dispositif de prise de vue 10 comprenant un élément d'intérêt E repéré par une pluralité de points image p, des coordonnées réelles (X, Y, Z) d'un point d'intérêt P dans l'environnement du dispositif de prise de vue 10 correspondant à un point image p de la pluralité de points image p.

Un point d'intérêt P est un point pour lequel le calculateur s'intéresse à ses coordonnées dans le monde réel, par exemple, pour en déduire une distance avec un autre objet d'intérêt E.

Chaque point image p est caractérisé par un triplet de composantes (x, y, w) comprenant des coordonnées bidimensionnelles pixeliques (x, y) et une profondeur relative w par rapport à un point image de référence pref appartenant à la pluralité de points image p. Chaque point image p correspond dans l'environnement réel à un point P de coordonnées réelles (X, Y, Z) comprenant une hauteur Y.

Selon une étape de sélection 100, le calculateur 20 sélectionne un point image remarquable pr parmi la pluralité de points image p associée à l'élément d'intérêt E, et attribue une hauteur prédéfinie Hr à la hauteur Yr.

Par exemple, l'élément d'intérêt E correspond à une personne, le point image remarquable pr est localisé au niveau d'un pied de la personne, la hauteur prédéfinie Hr du point remarquable Pr est égale à zéro.

Il est très intéressant de choisir un point image remarquable pr localisé au sol car la hauteur prédéfinie Hr du point remarquable Pr est égale à zéro. La plupart des éléments d'intérêt E dans une image i ont un contact avec le sol :

un véhicule automobile, un piéton, un vélo. Ainsi, pour une utilisation du procédé de l'invention pour détecter des interactions entre personnes ou des dangers de collision entre des véhicules ou un véhicule et une personne, ce choix de point image remarquable pr peut être appliqué en théorie pour tous les éléments d'intérêt.

Cependant, dans une image i, un élément d'intérêt E peut être occulté par exemple par un autre élément d'intérêt E, ce qui peut rendre non visible dans l'image i la partie de l'élément d'intérêt E en contact avec le sol.

Parfois également, un élément d'intérêt E est repéré par des points images p ne comprenant pas de points au sol. Par exemple une personne est repérée par des points images p issus d'un modèle de points de squelette dont les points pieds du squelette sont localisés au niveau des chevilles.

Ainsi, dans le cas d'élément d'intérêt E étant une personne se tenant debout sur le sol, lorsque la pluralité de points image p ne comporte aucun point image p localisé au niveau du sol, le calculateur 20 peut choisir un point image remarquable pr localisé par exemple au niveau d'un bassin de ladite personne, ou au niveau de la tête de ladite personne.

Un point image remarquable pr localisé au niveau du bassin ou de la tête d'une personne est remarquable en ce que la hauteur du bassin ou de la tête d'une personne se tenant debout, même en mouvement lorsque la personne marche, varie peu donc l'ordre de grandeur est connu. Il est à noter qu'un tel point remarquable peut être sélectionné par le calculateur 20 même dans le cas où la pluralité de points image p comprend un point localisé au sol.

La hauteur prédéfinie Hr associée à un point image remarquable pr localisé au niveau de la tête d'une personne est de préférence une valeur comprise entre 155 cm et 180 cm, par exemple 160 cm.

La hauteur prédéfinie Hr associée à un point image remarquable pr localisé au niveau du bassin d'une personne est une valeur comprise entre 65 cm et 85 cm, par exemple 70 cm.

Par exemple, l'élément d'intérêt E correspond à un véhicule automobile ou un vélo, le point image remarquable pr est localisé au niveau du bas d'une enveloppe de délimitation BB alignée à une roue du véhicule automobile ou du vélo en contact avec le sol, la hauteur prédéfinie Hr du point remarquable Pr est égale à zéro.

Par exemple, l'élément d'intérêt E correspond à un véhicule automobile, le point image remarquable pr est localisé au niveau du haut d'une enveloppe de délimitation BB alignée au toit du véhicule automobile, la hauteur prédéfinie Hr du point remarquable Pr est égale à une valeur comprise entre 160 cm et 195 cm, par exemple égale à 170 cm.

Selon une étape de de calcul 110, le calculateur 20 calcule une profondeur absolue wa du point image remarquable pr à partir du triplet de composantes (xr, yr, wr) du point image remarquable pr et de la hauteur prédéfinie Hr.

En particulier, l'étape de de calcul 110 comprend une sous étape d'estimation 101 et une sous étape de calcul 102.

Selon la sous étape d'estimation 101 le calculateur 20 estime les coordonnées réelles (Xr, Yr, Zr) du point remarquable Pr dans l'environnement réel du dispositif de prise de vue 10 en fonction des paramètres de calibration (f, $\theta$, c), du triplet de composantes (xr, yr, wr) du point image remarquable pr et de la hauteur prédéfinie Hr.

Pour estimer les coordonnées (Xr, Yr, Zr) du point remarquable Pr dans l'environnement réel du dispositif de prise de vue 10, on utilise la matrice de projection P du dispositif de prise de vue 10 qui est définie en fonction des paramètres de calibration (f, $\theta$, c) de la manière suivante :

$$P = \begin{bmatrix} f & 0 & 0 \\ 0 & f & 0 \\ 0 & 0 & 1 \end{bmatrix} \cdot \begin{bmatrix} 1 & 0 & 0 \\ 0 & \cos(\theta) & -\sin(\theta) \\ 0 & \sin(\theta) & \cos(\theta) \end{bmatrix} \cdot \begin{bmatrix} 1 & 0 & 0 & 0 \\ 0 & 1 & 0 & -c \\ 0 & 0 & 1 & 0 \end{bmatrix}$$

$$P = \begin{bmatrix} f & 0 & 0 & 0 \\ 0 & f \cdot \cos(\theta) & -f \cdot \sin(\theta) & -f \cdot c \cdot \cos(\theta) \\ 0 & \sin(\theta) & \cos(\theta) & -c \cdot \sin(\theta) \end{bmatrix}$$

Le référentiel terrestre et le repère image sont tels que représentés sur la figure 1.

A un point réel de coordonnées (X,Y,Z) dans le référentiel terrestre correspond un point image de coordonnées bidimensionnelles (x,y) dans le repère image, via les paramètres de calibration (f, $\theta$, c).

Plus précisément, on peut obtenir une représentation homogène (xh,yh,wh) d'un point image par multiplication par la matrice de projection P de la représentation homogène (X,Y,Z,1) d'un point réel correspondant, selon la relation suivante :

$$\begin{bmatrix} xh \\ yh \\ wh \end{bmatrix} = P \cdot \begin{bmatrix} X \\ Y \\ Z \\ 1 \end{bmatrix} = \begin{bmatrix} f & 0 & 0 & 0 \\ 0 & f \cdot \cos(\theta) & -f \cdot \sin(\theta) & -f \cdot c \cdot \cos(\theta) \\ 0 & \sin(\theta) & \cos(\theta) & -c \cdot \sin(\theta) \end{bmatrix} \cdot \begin{bmatrix} X \\ Y \\ Z \\ 1 \end{bmatrix}$$

$$\begin{bmatrix} xh \\ yh \\ wh \end{bmatrix} = \begin{bmatrix} f \cdot X \\ f \cdot \cos(\theta) \cdot Y - f \cdot \sin(\theta) \cdot Z - f \cdot c \cdot \cos(\theta) \\ \sin(\theta) \cdot Y + \cos(\theta) \cdot Z - c \cdot \sin(\theta) \end{bmatrix}$$

On obtient pour un point image les coordonnés cartésiennes suivantes :

$$\begin{bmatrix} x \\ y \end{bmatrix} = \begin{bmatrix} \dfrac{f \cdot X}{\sin(\theta) \cdot Y + \cos(\theta) \cdot Z - c \cdot \sin(\theta)} \\ \dfrac{f \cdot \cos(\theta) \cdot Y - f \cdot \sin(\theta) \cdot Z - f \cdot c \cdot \cos(\theta)}{\sin(\theta) \cdot Y + \cos(\theta) \cdot Z - c \cdot \sin(\theta)} \end{bmatrix}$$

Appliqué au point remarquable Pr, on commence par isoler la deuxième équation, dont seul la coordonnée Z n'est pas connue car on sait que Yr=Hr. On a donc :

$$Zr = \frac{f \cdot \cos(\theta) \cdot (Hr - c) - \sin(\theta) \cdot (Hr - c) \cdot yr}{\cos(\theta) \cdot yr + f \cdot \sin(\theta)}$$

On peut alors déterminer la coordonnée Xr via la première équation :

$$Xr = xr \cdot \frac{\cos(\theta) \cdot Zr - (c - Hr) \cdot \sin(\theta)}{f}$$

Selon la sous étape de calcul 102, le calculateur 20 calcule la profondeur absolue wa du point image remarquable pr à partir des coordonnées réelles (Xr, Yr, Zr) estimées du point remarquable Pr et des paramètres de calibration (f, θ, c).

La profondeur absolue wa est calculée selon la formule ci-dessous, établie selon des transformations géométriques du repère terrestre comprenant une translation pour mettre l'origine au niveau du dispositif de prise de vue, et une rotation pour s'aligner avec l'axe optique A du dispositif de prise de vue 10:

$$wa = -\cos(\theta) \cdot Zr + (c - Hr) \cdot \sin(\theta).$$

Selon une étape de détermination 120, le calculateur détermine les coordonnées réelles (X, Y, Z) du point d'intérêt P dans l'environnement réel du dispositif de prise de vue 10, à partir du triplet de composantes (x, y, w) du point image p correspondant au point d'intérêt P et de la profondeur absolue wa.

En particulier, l'étape de détermination 120 comprend une sous étape de transformation 103 et une sous étape de détermination 104.

Selon la sous étape de transformation 103, le calculateur 20 transforme le triplet de composantes (x, y, w) du point image p correspondant au point d'intérêt P, en un triplet de composantes absolues (x', y', w') à partir de la profondeur absolue wa.

Le triplet de composantes absolues (x', y', w') est déterminé par les formules suivantes :

$$x' = x,$$

$$y' = y,$$

$$w' = w + wa - wr.$$

Selon la sous étape de détermination 104, le calculateur détermine les coordonnées réelles (X, Y, Z) du point d'intérêt P dans l'environnement réel du dispositif de prise de vue, à partir du triplet de composantes absolues (x', y', w') et des paramètres de calibration (f, θ, c).

Les coordonnées réelles (X, Y, Z) du point d'intérêt (P) sont déterminées comme suit :

$$X = \frac{x'}{f} \cdot w'$$

$$Y = c - \frac{y' \cdot w' \cdot \cos(\theta)}{f} - w' \cdot \sin(\theta)$$

$$Z = \frac{y' \cdot w' \cdot \sin(\theta)}{f} - w' \cdot \cos(\theta)$$

Ces équations sont le fruit de deux étapes : une première étape qui multiplie les termes x' et y' par le quotient w'/f afin de convertir les pixels en distances réelles, puis une seconde étape qui correspond à une transformation inverse de celle mentionnée lors du calcul de la profondeur absolue wa.

Les unités relatives aux équations ci-dessus sont les suivantes :

- la hauteur prédéfinie Hr du point remarquable Pr est en centimètres,
- la distance focale f du dispositif de prise de vue 10 est en pixels,
- l'angle θ du dispositif de prise de vue 10 est en radians,
- la hauteur c du dispositif de prise de vue 10 est en centimètres,
- les coordonnées bidimensionnelles pixeliques (x, y), (x', y'), (xr, yr) d'un triplet de composantes d'un point image p, pr sont en pixels,
- les profondeurs relatives w, wr et absolue wa, sont en centimètres,
- les coordonnées réelles (X, Y, Z), (Xr, Yr, Zr) du point d'intérêt P et du point remarquable Pr sont en centimètres.

Le procédé de l'invention permet de calculer les coordonnées réelles de points relatifs à des éléments d'intérêt E pris en image par un dispositif de prise de vue.

Cela permet par exemple d'estimer des distances entre des éléments d'intérêt et d'en déduire des informations sur des interactions entre des personnes ou des distances entre des personnes et des objets tels que des véhicules ou encore des distances entre objets tels que des véhicules. Il est ainsi possible avec un tel procédé de vérifier le respect d'une distanciation sociale entre personnes ou d'analyser des situations de proximité dangereuse entre plusieurs éléments d'intérêts.

## Revendications

1. Procédé de détermination par un calculateur (20), à partir d'une image (i) prise par un dispositif de prise de vue (10) comprenant un élément d'intérêt (E) repéré par une pluralité de points image (p), des coordonnées réelles (X, Y, Z) d'un point d'intérêt (P) dans l'environnement du dispositif de prise de vue (10) correspondant à un point image (p) de la pluralité de points image (p), chaque point image (p) étant **caractérisé par** un triplet de composantes (x, y, w) comprenant des coordonnées bidimensionnelles pixeliques (x, y) et une profondeur relative (w) par rapport à un point image de référence (pref) appartenant à la pluralité de points image (p), chaque point image (p) correspondant dans l'environnement réel à un point (P) de coordonnées réelles (X, Y, Z) comprenant une hauteur Y, le dispositif de prise de vue étant **caractérisé par** des paramètres de calibration (f, θ, c) prédéterminés comprenant :

   - un angle d'inclinaison transverse (θ) du dispositif de prise de vue (10),
   - une distance focale (f) du dispositif de prise de vue (10),
   - une hauteur (c) à laquelle est disposé le dispositif de prise de vue (10), le procédé comprenant les étapes suivantes :
   - une étape de sélection (100) dans l'image (i) par le calculateur d'un point image remarquable (pr) parmi la pluralité de points image (p), le point image remarquable (pr) correspondant dans l'environnement réel à un point remarquable (Pr) dont l'ordre de grandeur de la hauteur (Yr) est connu, une hauteur prédéfinie (Hr) étant attribuée à la hauteur (Yr),
   - une étape de calcul (110) par le calculateur (20) d'une profondeur absolue (wa) du point image remarquable (pr) à partir du triplet de composantes (xr, yr, wr) du point image remarquable (pr) et de la hauteur prédéfinie (Hr),
   - une étape de détermination (120) par le calculateur des coordonnées réelles (X, Y, Z) du point d'intérêt (P) dans l'environnement réel du dispositif de prise de vue, à partir du triplet de composantes (x, y, w) du point image (p) correspondant au point d'intérêt (P) et de la profondeur absolue (wa).

2. Procédé selon la revendication 1, le point image remarquable (pr) sélectionné étant localisé au niveau du sol de sorte que la hauteur prédéfinie (Hr) est nulle.

3. Procédé selon la revendication 1, l'élément d'intérêt (E) étant une personne se tenant debout sur le sol, la pluralité de points image (p) ne comportant aucun point image (p) localisé au niveau du sol, le point image remarquable (pr) sélectionné étant localisé soit au niveau d'un bassin de ladite personne, la hauteur prédéfinie (Hr) étant une valeur comprise entre 65 cm et 85 cm, soit au niveau de la tête de ladite personne, la hauteur prédéfinie (Hr) étant une valeur comprise entre 155 cm et 180 cm.

4. Procédé selon l'une quelconque des revendications précédentes, la profondeur absolue (wa) étant calculée par la formule suivante :

$$wa = -\cos(\theta) \cdot Zr + (c - Hr) \cdot \sin(\theta),$$

avec

- wa : la profondeur absolue,
- $\theta$ : l'angle d'inclinaison transverse du dispositif de prise de vue,
- c : la hauteur à laquelle est disposé le dispositif de prise de vue,
- Hr : la hauteur prédéfinie du point remarquable,
- Zr : une composante des coordonnées réelles (Xr, Yr, Zr) du point remarquable.

5. Procédé selon l'une quelconque des revendications précédentes, l'étape de calcul (110) comprenant :

- une sous étape d'estimation (101) par le calculateur (20) des coordonnées réelles (Xr, Yr, Zr) du point remarquable (Pr) dans l'environnement réel du dispositif de prise de vue (10) en fonction des paramètres de calibration (f, $\theta$, c), du triplet de composantes (xr, yr, wr) du point image remarquable (pr) et de la hauteur prédéfinie (Hr),
- une sous étape de calcul (102) par le calculateur (20) de la profondeur absolue (wa) du point image remarquable (pr) à partir des coordonnées réelles (Xr, Yr, Zr) estimées du point remarquable (Pr) et des paramètres de calibration (f, $\theta$, c).

6. Procédé selon l'une quelconque des revendications précédentes, l'étape de détermination (120) comprenant :

- une sous étape de transformation (103) par le calculateur (20) du triplet de composantes (x, y, w) du point image (p) correspondant au point d'intérêt (P), en un triplet de composantes absolues (x', y', w') à partir de la profondeur absolue (wa),
- une sous étape de détermination (104) par le calculateur des coordonnées réelles (X, Y, Z) du point d'intérêt (P) dans l'environnement réel du dispositif de prise de vue, à partir du triplet de composantes absolues (x', y', w') et des paramètres de calibration (f, $\theta$, c).

7. Procédé selon la revendication précédente, le triplet de composantes absolues (x', y', w') étant déterminé par les formules suivantes :

$$x' = x, \quad y' = y \quad \text{et} \quad w' = w + wa - wr,$$

avec

- (x', y', w') : le triplet de composantes absolues,
- (x, y, w) : le triplet de composantes du point image correspondant au point d'intérêt,
- wa : la profondeur absolue,
- wr : la profondeur relative du point image remarquable.

8. Procédé selon l'une quelconque des revendications 6 et 7, les coordonnées bidimensionnelles pixeliques (x, y) d'un point image (p) étant définies dans un repère image dont l'origine est situé dans un centre de l'image (i), les coordonnées réelles (X, Y, Z) du point d'intérêt (P) étant déterminées comme suit :

$$X = \frac{x'}{f} \cdot w'$$

$$Y = c - \frac{y' \cdot w' \cdot \cos(\theta)}{f} - w' \cdot \sin(\theta)$$

$$Z = \frac{y' \cdot w' \cdot \sin(\theta)}{f} - w' \cdot \cos(\theta)$$

avec :

- (X, Y, Z) : les coordonnées réelles du point d'intérêt,
- (x', y', w') : le triplet de composantes absolues,
- θ : l'angle d'inclinaison transverse du dispositif de prise de vue,
- c : la hauteur à laquelle est disposé le dispositif de prise de vue,
- f : la distance focale du dispositif de prise de vue.

**9.** Produit programme d'ordinateur comprenant les instructions de programme mettant en oeuvre les étapes du procédé de détermination selon l'une quelconque des revendications 1 à 9, lorsque les instructions de programme sont exécutées par un ordinateur.

**Europäisches Patentamt**
**European Patent Office**
**Office européen des brevets**

# RAPPORT DE RECHERCHE EUROPEENNE

Numéro de la demande

**EP 22 20 4743**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Yasir Salih ET AL: "Distance and Size Measurements of Objects in the Scene from a Single 2D Image", Life Science Journal Life Sci J, 1 janvier 2013 (2013-01-01), XP055453929, Extrait de l'Internet: URL:http://www.lifesciencesite.com/lsj/life1004/015_20845life1004_106_119.pdf [extrait le 2018-02-23] | 1,2,4,5, 9 | INV. G06T7/50 G06T7/70 |
| A | * Fig. 7 et Sec. 5.3, 1er paragraphe. Fig. 4, Sec. 5.1 et Eq (4-6), Eq (8). * ----- | 3,6-8 | |
| A | DEREK HOIEM ET AL: "Putting Objects in Perspective", INTERNATIONAL JOURNAL OF COMPUTER VISION, KLUWER ACADEMIC PUBLISHERS, BO, vol. 80, no. 1, 17 avril 2008 (2008-04-17), pages 3-15, XP019616647, ISSN: 1573-1405 * le document en entier * ----- | 1-9 | |
| A | KUAL-ZHENG LEE: "A Simple Calibration Approach to Single View Height Estimation", COMPUTER AND ROBOT VISION (CRV), 2012 NINTH CONFERENCE ON, IEEE, 28 mai 2012 (2012-05-28), pages 161-166, XP032456228, DOI: 10.1109/CRV.2012.29 ISBN: 978-1-4673-1271-4 * le document en entier * ----- | 1-9 | **DOMAINES TECHNIQUES RECHERCHES (IPC)**<br><br>G06T |
| A | ZHU RUI ET AL: "Single View Metrology in the Wild", 23 août 2020 (2020-08-23), ARXIV.ORG, PAGE(S) 316 - 333, XP047581741, * le document en entier * ----- | 1-9 | |

Le présent rapport a été établi pour toutes les revendications

| Lieu de la recherche | Date d'achèvement de la recherche | Examinateur |
|---|---|---|
| Munich | 6 avril 2023 | Nicolau, Stephane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................
& : membre de la même famille, document correspondant

EPO FORM 1503 03.82 (P04C02)